(19)

Europäisches
Patentamt
European
Patent Office
Office européen
des brevets

(11) **EP 4 379 609 A1**

(12) **EUROPEAN PATENT APPLICATION**

(43) Date of publication:
**05.06.2024 Bulletin 2024/23**

(21) Application number: **22210102.4**

(22) Date of filing: **29.11.2022**

(51) International Patent Classification (IPC):
***G06N 3/098*** (2023.01)

(52) Cooperative Patent Classification (CPC):
**G06N 3/098; G06N 3/04; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Turun Ammattikorkeakoulu Oy
20520 Turku (FI)**

(72) Inventors:
• **Khan, Mohammad
Turku (FI)**

• **Khan, Suleiman
Turku (FI)**
• **Kontio, Elina
Turku (FI)**
• **Alhoniemi, Esa
Turku (FI)**
• **Jafaritadi, Mojtaba
Turku (FI)**

(74) Representative: **Moosedog Oy
Vähäheikkiläntie 56C
20810 Turku (FI)**

(54) **METHOD AND SYSTEM FOR AGGREGATION OF SEMANTIC SEGMENTATION MODELS**

(57)      Disclosed is a method (100) and a system (200) for aggregation of semantic segmentation models from multiple collaborators (206). The method comprises selecting, in batches, at least two collaborators from the multiple collaborators. The method further comprises receiving corresponding semantic segmentation model information (208) from each of the at least two collaborators. The method further comprises assigning respective weight parameters to the semantic segmentation model information from each of the at least two collaborators. The method further comprises adding controlled noise to the weight parameters for the semantic segmentation model information from each of the at least two collaborators. The method further comprises generating an aggregated model (210) based on the semantic segmentation model information using the weight parameters with the noise added thereto from each of the at least two collaborators.

FIG. 3

**Description**

TECHNICAL FIELD

The present disclosure, generally, relates to federated learning for aggregation of semantic segmentation models from multiple collaborators; and in particular to secure, privacy-preserving and communication-efficient aggregation of the semantic segmentation models.

BACKGROUND

Federated learning (FL) is a computational paradigm for distributed or decentralized machine learning where training data is hosted on multiple collaborators and a central server learns a consensus model by aggregating locally computed model updates. In other words, FL allows distributed adaption of AI development such that private data never leaves the local data storage (e.g., a medical device, academic research centre, clinical trial site, and medical data repository). This is in contrast to classic machine learning (ML) methods that use data stored in a centralized database, where data is curated, pre-possessed and modelled with full access to all privacy sensitive data. In particular, in FL, multiple collaborators (also referred to as devices or clients) contribute to a learning task. The communication between the clients usually involves a central orchestrator that receives, and aggregates client's updates. This approach allows clients to collaboratively train a shared inference model while holding all the training data on the local storage privately, decoupling the ability to do machine learning from the need to keep the data in one centralized location. Hence, only certain model updates may leave the client's secure computational environment, enabling the aggregation of the learned parameters into a single generalized (global) model without disclosing the raw data to the third parties.

Decentralized training of an inference model in a federated fashion is an iterative process. Each client runs several epochs, for example in a stochastic gradient descent optimization problem where a neural network is trained with certain mini-batches and communicates its model update back to the server. The differences between the local models and the received global model are considered as model updates, for which the server aggregates them from the contributing clients to obtain an improved global model. This process continues to the next iteration until a desired performance is obtained. This results in FL requiring intensive communication between the server and clients during model training. Therefore, if the model is large, the communication cost is immense. Since the size of deep learning models has grown dramatically in the past decade, now containing hundreds of millions of trainable parameters, communication of these cumbersome models can lead to a significant overhead, which is especially inconvenient for decentralized clients with relatively low bandwidth and throughput. Thus, although big models are very successful in terms of their performance, they are rarely deployed in conventional federated learning systems. Further, FL may not always provide sufficient privacy guarantees. Once successfully hacked, adversary actors can deploy a wide range of attacks that can reveal privacy-sensitive information. Although an adversary may not be able to inspect the data, it can inspect the models through other security threats such as communication bottlenecks, poisoning attacks, model inversion attacks, and backdoor attacks.

In general, algorithms for FL face three main challenges: 1) statistical heterogeneity in weight aggregation, 2) communication efficiency, and 3) privacy with security. From statistical heterogeneity point of view, an efficient aggregation strategy, i.e., combining the models of all clients, is required for the successful implementation of FL in real-life applications. Numerous aggregation strategies have been studied, of which Federated Averaging (FedAvg) is one of the most well-known FL methods. This approach considers the normalized number of non-Independent Identical Distribution (non-IID) data in each client to aggregate the models in the server. However, FedAvg does not address the weight divergence challenge due to the strongly skewed data distributions. From communication efficiency point of view, this is the primary bottleneck in many FL settings, which requires adequate cost management strategies such as decreasing the number of clients, reducing the update size, and reducing the number of updates. The existing research on communication-efficient FL is divided into four major categories: model compression, client selection, update reducing, and peer-to-peer learning, all of which results in one compromise or the other. From privacy-preserving point of view, it is also important to securely aggregate the model parameters or weights to avoid possibilities of leakage of information and vulnerability to adversarial inference and inversion. Even well-generalized deep models can potentially leak a considerable amount of information about the input training data. Even worse, certain neural networks trained on sensitive data (e.g., medical image data) can memorize the training data.

Therefore, in light of the foregoing discussion, there exists a need to overcome the aforementioned limitations associated with the conventional federation learning algorithms and provide a method and a system for aggregation of semantic segmentation models from multiple collaborators which provide statistical heterogeneous aggregation and efficient communication in a privacy-preserving manner.

SUMMARY OF THE INVENTION

The present disclosure seeks to provide a method for aggregation of semantic segmentation models from multiple collaborators. The present disclosure also seeks to provide a system for aggregation of semantic segmentation models from multiple collaborators. An aim of the present disclosure is to provide a solution that overcomes at least partially the problems encountered in prior art. In particular, to overcome the aforementioned problems, the system and the method of the present disclosure propose the establishment of an efficient adaptive regularized weight aggregation approach; communication efficiency by collaborating across multiple decentralized edge devices or servers containing local data samples without transferring private data therebetween; and utilization of secure aggregation protocols such as differential privacy (DP) to alleviate the risk of adversarial attacks and enhance privacy guarantees in FL.

In one aspect, an embodiment of the present disclosure provides a method for aggregation of semantic segmentation models from multiple collaborators, the method comprising:

- selecting, in batches, at least two collaborators from the multiple collaborators;
- receiving corresponding semantic segmentation model information from each of the at least two collaborators;
- assigning respective weight parameters to the semantic segmentation model information from each of the at least two collaborators;
- adding controlled noise to the weight parameters for the semantic segmentation model information from each of the at least two collaborators; and
- generating an aggregated model based on the semantic segmentation model information using the weight parameters with the noise added thereto from each of the at least two collaborators.

In another aspect, an embodiment of the present disclosure provides a system for aggregation of semantic segmentation models from multiple collaborators, the system comprising:

- an aggregator server; and
- a communication network to dispose the aggregator server in communication with each of the multiple collaborators,
- wherein the aggregator server is configured to:

  - select, in batches, at least two collaborators from the multiple collaborators;
  - receive corresponding semantic segmentation model information from each of the at least two collaborators;
  - assign respective weight parameters to the semantic segmentation model information from each of the at least two collaborators;
  - add controlled noise to the weight parameters for the semantic segmentation model information from each of the at least two collaborators; and
  - generate an aggregated model based on the semantic segmentation model information using the weight parameters with the noise added thereto from each of the at least two collaborators.

Embodiments of the present disclosure substantially eliminate or at least partially address the aforementioned problems in the prior art and enable aggregation of semantic segmentation models from multiple collaborators with statistical heterogeneity and efficient communication, and in a privacy-preserving manner.

Additional aspects, advantages, features, and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:

FIG. 1 is an       illustration of a flowchart listing steps involved in a method for aggregation of semantic segmentation models from multiple collaborators, in accordance with an embodiment of the present disclosure;

FIG. 2 is    a simplified schematic diagram illustration of a system for aggregation of semantic segmentation models from multiple collaborators, in accordance with an embodiment of the present disclosure;

FIG. 3    is a detailed schematic diagram illustration of the system of FIG. 2 for aggregation of semantic segmentation models from multiple collaborators, in accordance with an embodiment of the present disclosure; and

FIGs. 4A-4C    are exemplary illustrations of implementation of sliding window technique over a randomized index of the multiple collaborators, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a method for aggregation of semantic segmentation models from multiple collaborators, the method comprising:

- selecting, in batches, at least two collaborators from the multiple collaborators;
- receiving corresponding semantic segmentation model information from each of the at least two collaborators;
- assigning respective weight parameters to the semantic segmentation model information from each of the at least two collaborators;
- adding controlled noise to the weight parameters for the semantic segmentation model information from each of the at least two collaborators; and
- generating an aggregated model based on the semantic segmentation model information using the weight parameters with the noise added thereto from each of the at least two collaborators.

In another aspect, an embodiment of the present disclosure provides a system for aggregation of semantic segmentation models from multiple collaborators, the system comprising:

- an aggregator server; and
- a communication network to dispose the aggregator server in communication with each of the multiple collaborators,
- wherein the aggregator server is configured to:

    - select, in batches, at least two collaborators from the multiple collaborators;
    - receive corresponding semantic segmentation model information from each of the at least two collaborators;
    - assign respective weight parameters to the semantic segmentation model information from each of the at least two collaborators;
    - add controlled noise to the weight parameters for the semantic segmentation model information from each of the at least two collaborators; and
    - generate an aggregated model based on the semantic segmentation model information using the weight parameters with the noise added thereto from each of the at least two collaborators.

The present disclosure relates to secure and communication-efficient aggregation of semantic segmentation models comprising an aggregation process coupled with a data compression policy and a statistical/mathematical definition of the privacy. In particular, the present disclosure provides the method and the system for aggregation of semantic segmentation models from multiple collaborators spatially and temporally to generate an aggregated model (also, sometimes, referred to as "inference model" or "master model") which may be a deep artificial neural network model or any trainable machine learning framework.

In the present disclosure, the aggregation process involves federated learning (FL) which is a computational paradigm for distributed or decentralized machine learning where training data is shared via multiple collaborators and a central server learns a consensus model by aggregating locally computed updates. With the advent of strict regulations like GDPR (EU) and HIPAA (US), the usability spectrum of FL is diverse. For instance, FL can facilitate healthcare organizations to collaborate and share information such as medical images without compromising patient's privacy. This is in contrast to conventional medical imaging studies that use data stored in a centralized database, where the curation of image data, prepossessing, and model development are done with full access to the sensitive and delicate patient information. Moreover, by using secure FL infrastructures, one can potentially eliminate tedious and time-consuming ethical permission process for using medical images, as the data never leaves the host premises.

As used herein, the term 'collaborators' refer to clients/nodes (e.g., a medical device, academic research centre, clinical trial site, and medical data repository) which contribute to a learning task by providing private data for generating the aggregated model. In the present examples, the collaborators may be in the form of decentralized edge devices or servers containing local data samples. The present disclosure allows the collaborators to collaboratively train the aggregated model while holding all the training data privately on a local storage, decoupling the ability to do machine learning from the need to keep the data in one centralized location. Hence, only certain model updates may leave the collaborator's secure computational environment, enabling the aggregation of the learned parameters into the aggregated model without disclosing the raw data to the third parties.

In such implementations, the communication between the collaborators usually involves a central orchestrator in the form of the aggregator server (sometimes simply referred to as "server") that receives, and aggregates client's updates. As used herein, the term 'aggregator server' refers to a structure and/or module that includes programmable and/or non-programmable components configured to store, process and/or share information or data with the collaborators. The aggregator server may include any suitable arrangement of physical or virtual computational entities capable of enhancing information to perform the required computational tasks. The aggregator server may be implemented as a hardware server and/or plurality of hardware servers operating in a parallel or in a distributed architecture. In some examples, the aggregator server may be supplemented with additional computation system, such as neural networks, and hierarchical clusters of pseudo-analog variable state machines implementing artificial intelligence algorithms. Optionally, the aggregator server is implemented as a computer program that provides various services (such as, database service) to other devices, modules, or apparatus.

The method comprises selecting, in batches, at least two collaborators from the multiple collaborators. That is, for the collaborator selection, the present method use a subset of the available collaborators (for example, 20%) in each round. To allow for heterogeneity where collaborators can contribute in a non-deterministic fashion, the present method simulate random selection of collaborators in each round. However, it is also required to ensure that the model sees all collaborators roughly the same number of times. For this purpose, the present method comprises implementing a sliding window technique over a randomized index of the multiple collaborators for selecting, in batches, the at least two collaborators from the multiple collaborators. That is, the method considers a batch-wise selection (subset) of collaborators (i.e., clients/nodes) using the sliding window over the available and randomly ordered set of collaborators in each round. In some examples, once all collaborators have participated in updates, a new randomized order may be computed (say, for next round) to allow for better learning. For implementation of the sliding window technique, herein, at first step, the model receives a list of initial collaborators; then, at second step, collaborator order is randomized to help better learning; and subsequently, at third step, collaborators are selected for each round using a sliding window. Further, once the collaborator list is entirely used, it is shuffled again, and the process starts again from the second step.

The method further comprises receiving corresponding semantic segmentation model information from each of the at least two collaborators. As may be understood from above discussion, the semantic segmentation model information from each of the at least two collaborators is received at the aggregator server. Herein, the method implements a communication-efficient approach for federated aggregation of large model parameters, in which the parameters reflect the pixel-wise temporal and spatial information indicative of the cluster parts of an object. The method includes fast and efficient communication between the selected collaborators (clients/nodes) representing reflections of the local model parameters. In the present examples, the local model parameters may be 2D deep neural networks weights, 2.5D deep neural networks weights, 3D deep neural networks weights, or other corresponding model weights or parameters (as discussed in more detail later in the description).

In some embodiments, the method comprises optimizing the receiving of the semantic segmentation model information from each of the at least two collaborators at the aggregator server by utilizing at least one of: sparsity transformations algorithm, pruning algorithm, or encoded polyline utility algorithm. Herein, the sparsity transformations algorithm involves Sparse Fourier Transform (SFT) which addresses the big data setting by computing a compressed Fourier transform using only a subset of the input data, in time sub-linear in the data set size. The pruning algorithm provides a data compression technique in machine learning and search algorithms that reduces the size of decision trees by removing sections of the tree that are non-critical and redundant to classify instances. Further, the encoded polyline utility algorithm (polyline encoding) provides lossy compression that allows to store a series of coordinates as a single string using signed values for data compression. Use of such algorithms for data compression may be contemplated by a person skilled in the art and thus not explained in any more detail herein for brevity of the present disclosure.

The method further comprises assigning respective weight parameters (also, sometimes, referred to as "model parameters") to the semantic segmentation model information from each of the at least two collaborators. It may be appreciated that it is required to aggregate model information/parameters from Independent and Identically Distributed (IID) and non-Independent and Identically Distributed (non-IID) data parameters coming from the collaborators which can diverge. In particular, a fundamental issue with non-IID data is that model parameters coming from the collaborators can diverge. To overcome such a scenario, the present method implements weighted aggregation of the collaborators at the aggregator server.

In an embodiment, the method comprises assigning higher weight parameter to the semantic segmentation model information being closer to a non-weighted average (or simply, average) of the semantic segmentation model information from each of the at least two collaborators in comparison to the semantic segmentation model information of other of the at least two collaborators. That is, the collaborators are weighted based on how similar they are to their non-weighted average. This mechanism helps in generating the aggregated model that is representative of most of the collaborators at each round.

Specifically, at round $r$, the parameters $p^{C^r}$ of the participating collaborators $C^r$ are collected at the server. The average of these parameters is calculated as:

$$\hat{p} = \frac{1}{|C^r|} \Sigma_{i \in C^r} p_i.$$

$$(1)$$

Subsequently, the similarity of each collaborator $c \in C^r$ is calculated with the average parameter values from all collaborators as:

$$sim_c = \frac{\Sigma_{i \in C^r} |p_i - \hat{p}|}{|p_c - \hat{p}| + \epsilon},$$

$$(2)$$

where $\varepsilon = 1e - 5$ (small positive constant). This is further normalized to obtain similarity weights as follows:

$$u_c = \frac{sim_c}{\Sigma_{i \in C^r} sim_i}.$$

$$(3)$$

Herein, the collaborators closer to the average receive a higher similarity score while those further away obtain a lower value. In the extreme case, this approach can expel the diverging collaborator.

In an embodiment, the method further comprises assigning higher weight parameter to the semantic segmentation model information based on a corresponding database size being larger in comparison to the semantic segmentation model information of other of the at least two collaborators. That is, in order to adjust for the effect of varying number of samples in each collaborator $c \in C^r$, a second weighting factor is used that favours collaborators with larger sample sizes, as:

$$v_c = \frac{N_c}{\Sigma_{i \in C^r} N_i}$$

$$(4)$$

where $N_c$ is the number of examples in collaborator c.

Using the weights obtained using Eqs. 3 and 4, the similarity weighted parameter values ($p^m$) are computed as:

$$w_c = \frac{u_c + v_c}{\Sigma_{i \in C^r}(u_i + v_i)},$$

(5)

Finally, the parameters are aggregated as follows:

$$p^m = \frac{1}{|C^r|} \cdot \Sigma_{i \in C^r}(w_i \cdot p_i).$$

(6)

The normalized aggregated parameters $p^m$ are then dispatched to the next set of collaborators in the successive federation rounds.

The above described aggregation algorithm (also referred to as Similarity Aggregation (SimAgg)) is summarized below:

---

**Algorithm 1** SimAgg aggregation algorithm

---

1: **procedure** SIMILARITY WEIGHTED AGGREGATION($C^r$,$p_{C^r}$)
2:    $\epsilon \leftarrow 1e-5$                    ▷ $C^r$ = set of collaborators (at round $r$)
3:    $\hat{p}$ = average($p_{C^r}$) using **Eq.** 1  ▷ $p_{C^r}$ = parameters of the collaborators in $C^r$
4:    **for** $c$ in $C^r$ **do**
5:        Compute similarity weights $u_c$ using **Eqs.** 2 and 3
6:        Compute sample weights $v_c$ using **Eq.** 4
7:    **for** $c$ in $C^r$ **do**
8:        Compute aggregation weights $w_c$ using **Eq.** 5
9:    Compute master model parameters $p^m$ using **Eq.** 6
10:    **return** $p^m$

---

In some examples, a regularizing version of the aggregation approach is implemented which involves stronger penalization of diverging collaborators. Herein, the weight aggregation methodology is adapted as described above to compute the similarity and sample weights using Eqs. 3 and 4, and further the regularizing weights of each of the collaborator are computed as:

$$w_c = \frac{u_c \cdot v_c}{\Sigma_{i \in C^r}(u_i \cdot v_i)}.$$

(7)

Finally, the master model's parameters are computed using Eq. 6. Such aggregation algorithm is referred to as Regularized Aggregation (RegAgg), and is summarized as below:

---

**Algorithm 2** RegAgg aggregation algorithm

---

1: **procedure** REGULARIZED AGGREGATION($C^r$,$p_{C^r}$)
2:     $\epsilon \leftarrow 1e-5$                              ▷ $C^r$ = set of collaborators (at round $r$)
3:     $\hat{p} = \text{average}(p_{C^r})$ using **Eq.** $\boxed{1}$  ▷ $p_{C^r}$ = parameters of the collaborators in $C^r$
4:     **for** $c$ in $C^r$ **do**
5:         Compute similarity weights $u_c$ using **Eqs.** $\boxed{2}$ and $\boxed{3}$
6:         Compute sample weights $v_c$ using **Eq.** $\boxed{4}$
7:     **for** $c$ in $C^r$ **do**
8:         Compute aggregation weights $w_c$ using **Eq.** $\boxed{7}$
9:     Compute master model parameters $p^m$ using **Eq.** $\boxed{6}$
10:     **return** $p^m$

---

The present disclosure further integrates a security feature to avoid possibilities of leakage of information and vulnerability to adversarial inference. The present disclosure considers a differential privacy paradigm to guarantee the anonymity of records in the private data, and provide a GDPR-compliant anti-doxing tool for the mechanism.

For this purpose, the method further comprises adding controlled noise to the weight parameters for the semantic segmentation model information from each of the at least two collaborators. In this private learning setting, artificial noise is added to the receiving collaborator's model parameters at the aggregator server during aggregation. Herein, the controlled noise (or using encryption) is added to the local sensitive data before the aggregated model is trained to protect sensitive information from possible attacks. This is part of Differential Privacy (DP) framework which is a mathematical technique of adding a controlled amount of randomness to a dataset to prevent adversaries from obtaining sensitive information in the dataset. It may be understood that the added randomness is controlled such that the resulting local dataset remains accurate enough to generate aggregate insights while maintaining the privacy.

In the present implementation, the added noise is based on at least one of: a privacy budget parameter ε, a sensitivity scaling factor α, and a database size of the corresponding semantic segmentation model information. For instance, the privacy budget parameter ε is selected as a trade-off between the model accuracy performance and model parameter privacy protection. It may be appreciated that the DP components, such as the privacy budget parameter ε and the sensitivity scaling factor α, as well as the dataset size are the key parameters by which Gaussian noise characteristics are defined. At the aggregator server, the model aggregates are perturbed by adding Gaussian noise to parameters of each participating collaborator model. In such global differential privacy setup, which is adapted for both regularized aggregation (RegAgg) and non-regularized aggregation (SimAgg) policies, privacy guarantees are adaptable and robust as the privacy budget and sensitivity can be tuned according to data, which is practical for anonymous image semantic segmentation.

The method further comprises generating the aggregated model based on the semantic segmentation model information using the weight parameters with the noise added thereto from each of the at least two collaborators. In the present method, the aggregated model is generated at the aggregator server. The noise model is added to the receiving model parameters at the aggregation phase. The formulation below describes a pseudo code for differentially private FL policy algorithm at the weight aggregation using FedAvg policy. The formulations presented herein are applicable in SimAgg and RegAgg methods of the present disclosure.

---

**Algorithm 1** DP Weighted Average algorithm

---

1: **procedure** DP FEDAVG($C^r$, $p^r$)
2:     $\epsilon \leftarrow 1$             ▷ Init DP noise parameters
3:     $\alpha \leftarrow 1$
4:     sensitivity $\leftarrow 2/(|C^r| \cdot \min_{p_c^r}(DatasetSize) \cdot \alpha)$
5:     scale $\leftarrow$ sensitivity / $\epsilon$
6:     **for** $c$ in $C^r$ **do**     ▷ Add noise to all collaborators
7:         $p_c^r \leftarrow p_c^r + \text{Gamma}(1/|C^r|, \text{scale})$
8:     $p_{master} = \frac{1}{|C^r|}\sum_{c \in C^r} p_c^r$     ▷ Compute master model
9:     **return** $p_{master}$

---

The method further comprises transferring the aggregated model by the aggregator server to each of the multiple collaborators. In some embodiments, the method comprises optimizing the transferring of the aggregated model by the aggregator server to each of the multiple collaborators by utilizing at least one of: sparsity transformations algorithm, pruning algorithm, or encoded polyline utility algorithm. Such algorithms have been explained in the preceding paragraphs and thus not repeated herein for the brevity of the present disclosure. In the present method, at least one of the said algorithms is integrated to accelerate the global model convergence in each federation round.

The method as described in the preceding paragraphs may be coded in the form of a computer program to be executed by a computing arrangement, such as the aggregator server of the present system. The various embodiments and variants disclosed above apply *mutatis mutandis* to the present system for aggregation of semantic segmentation models from the multiple collaborators without any limitations. The system receives semantic segmentation model information comprising of at least two collaborators (clients/nodes) and provides the capability to securely aggregate their model information. The system receives an amount of model weights/parameters from the collaborators and renders aggregated model resulting from the amount of processing to, for instance, the image type for producing information indicative of clustering parts of an image together which belong to the same object class.

In particular, the system includes the aggregator server, and a communication network to dispose the aggregator server in communication with each of the multiple collaborators. As used herein, the term "communication network" shall expressly include, but not be limited by, any local area network (LAN), wide area network (WAN), intranet, extranet, global communication network, the Internet, and/or wireless communication system. For example, such a communication network may refer to any number of communication systems including one or more of the following: a cellular phone network, a WiFi™ network, a pico-cell network, an Enhanced Data rates for GSM Evolution network (EDGE), a 3rd generation mobile telecommunications network (3G), a mobile worldwide interoperability for microwave access network (WiMax), a voice over Internet protocol (IP) system (e.g., via a wireless local area network (WLAN), a wireless wide area network (WWAN), a Long Term Evolution network (LTE), wideband-CDMA (WCDMA), Evolution-Data Optimized or Evolution-Data (EVDO), Orthogonal Frequency-Division Multiple Access network (OFDMA), the like, and/or combinations thereof, according to the particular application.

In the present system, the aggregator server is configured to select, in batches, at least two collaborators from the multiple collaborators. In an embodiment, the aggregator server is configured to implement a sliding window technique over a randomized index of the multiple collaborators for selecting, in batches, the at least two collaborators from the multiple collaborators.

The aggregator server is further configured to receive corresponding semantic segmentation model information from each of the at least two collaborators. In some embodiments, the aggregator server is further configured to optimize the receiving of the semantic segmentation model information from each of the at least two collaborators by utilizing at least one of: sparsity transformations algorithm, pruning algorithm, or encoded polyline utility algorithm.

The aggregator server is further configured to assign respective weight parameters to the semantic segmentation model information from each of the at least two collaborators. In an embodiment, the aggregator server is configured to assign higher weight parameter to the semantic segmentation model information being closer to a non-weighted average of the semantic segmentation model information from each of the at least two collaborators in comparison to the semantic segmentation model information of other of the at least two collaborators. Additionally, or alternatively, the aggregator server is configured to assign higher weight parameter to the semantic segmentation model information based on a corresponding database size being larger in comparison to the semantic segmentation model information of other of the at least two collaborators.

The aggregator server is further configured to add controlled noise to the weight parameters for the semantic segmentation model information from each of the at least two collaborators. In an embodiment, the added noise is based on at least one of: a privacy budget parameter $\varepsilon$, a sensitivity scaling factor $\alpha$, and a database size of the corresponding semantic segmentation model information.

The aggregator server is further configured to generate the aggregated model based on the semantic segmentation model information using the weight parameters with the noise added thereto from each of the at least two collaborators. The aggregator server is further configured to transfer the aggregated model to each of the multiple collaborators. In some embodiments, the aggregator server is further configured to optimize the transferring of the aggregated model to each of the multiple collaborators by utilizing at least one of: sparsity transformations algorithm, pruning algorithm, or encoded polyline utility algorithm.

The method (computer program) and the system (server/node) of the present disclosure provide information for secure and communication-efficient aggregation of semantic segmentation models including, but not limited to, computer vision tasks comprising an aggregation process (federated learning (FL) or swarm learning (SL)), coupled with a data compression policy and a statistical/mathematical definition of the privacy (differential privacy (DP)). The present method and the present system provides private processing and aggregating of model information spatially and temporally from a deep artificial neural network model or any trainable machine learning framework, and a statistical/mathematical definition of privacy for secure and private generation of the aggregated model. Herein, the machine learning or deep learning algorithm is privately/securely trained by collaborating across multiple decentralized edge devices or servers containing local data samples, without transferring private data therebetween.

The proposed framework of the method and the system of the present disclosure can be implemented for medical imaging applications providing differential privacy paradigm to guarantee anonymity of patients, and provide a GDPR-compliant anti-doxing tool. For instance, the proposed framework can allow for efficient and differentially private federated lesion/tumour segmentation in brain cancer images using magnetic resonance imaging (MRI) data in the field of neuroimaging. Further, the proposed framework can be deployed in various tomography segmentation use cases for different organs, including but not limited to biology and pathology, head and neck, heart and lungs imaging, liver, and upper and lower body area in general. Further, for radiation oncology, the proposed framework can play a key role as the invented framework allows a powerful master model when efficiently trained from various data lakes while also preserving the privacy of the patients participating in those data lakes. In addition to the medical imaging applications, the proposed framework can be deployed for other use cases such as autonomous vehicles for which semantic object detection, object tracking, and cluster part segmentations are required for controlling and coordinating the vehicle including, but not limited to, cars, drones, ships, boats etc. The proposed framework, with efficient and private federated learning, allows more accurate detection and tracking of the objects when various edge devices benefit from federated weight aggregation at the edge or on a cloud server.

## EXPERIMENTAL DATA

The present disclosure improves federation process by focusing on efficient aggregation, client selection, training-per-round, compression, and communication efficiency. The present disclosure provides an efficient method that aggregates the model updates trained on individual collaborators.

In an experimental setup, an exemplary data set (a subset of GBM (glioblastoma) cases from the Brain Tumour Segmentation Challenge (BraTS) 2020) with total of 341 multi-institutional patients is utilized. Supplementary information indicates the division of patients in different partitions. Partition 1 and partition 2 have 17 collaborators and 22 collaborators, respectively. Partition 1 means institutional split, while partition 2 is further divided based on the tumour size. The experimental setup uses Intel's OpenFL platform for federation learning and a predefined 3D U-shape neural network for the semantic segmentation of whole tumour, tumour core, and enhancing tumour. The metrics computed in the aggregation rounds are binary DICE similarity (whole tumour, enhancing tumour, tumour core) and Hausdorff (95%) distance (whole tumour, enhancing tumour, tumour core).

The hyperparameters used are shown in Table 1 below.

*Table 1: Hyperparameters used in aggregation algorithms*

| Leaderboard | Hyperparameter | SimAgg | RegAgg | FedAvg |
|---|---|---|---|---|
| 1 | Learning rate | 5e - 5 | 5e - 5 | 5e - 5 |
| 1 | Epochs per round | 5.0 | 1.0 | 1.0 |
| 2 | Learning rate | 5e - 5 | 5e - 5 | 5e - 5 |
| 2 | Epochs per round | 5.0 | 5.0 | 1.0 |

RESULTS

A comparison of baseline FedAvg with default setting and the present aggregation algorithms - namely regularized aggregation algorithm and similarity weighted aggregation algorithm - was performed, which shows that both of the present aggregation algorithms rapidly converge and are stable as the learning progresses across all the measured metrics. Moreover, the present aggregation algorithms show significant improvement in the performance for aggregation of neural network models in a federated learning setting.

DETAILED DESCRIPTION OF THE DRAWINGS

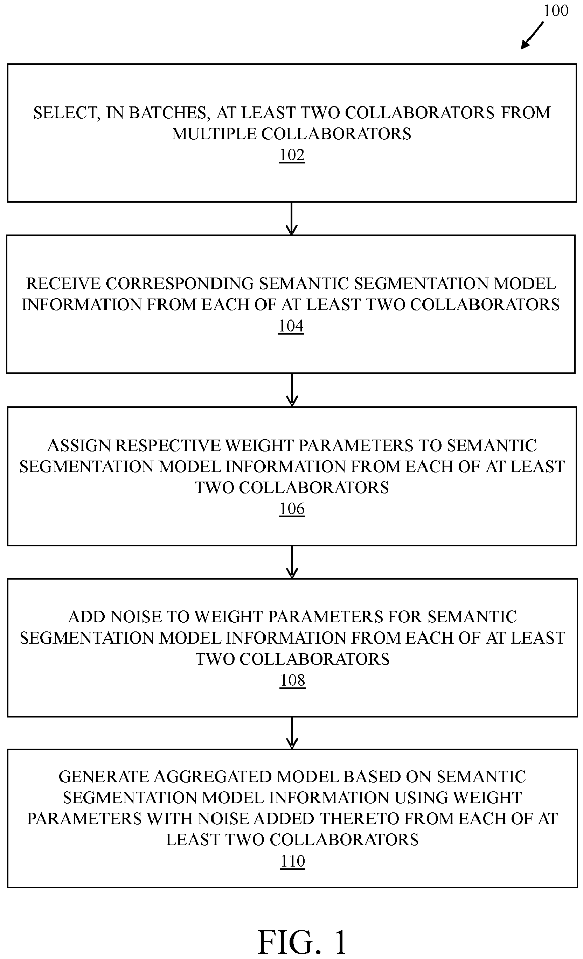

Referring to FIG. 1, illustrated is a flowchart listing steps involved in a method **100** for aggregation of semantic segmentation models from multiple collaborators, in accordance with an embodiment of the present disclosure. At step **102,** the method **100** comprises selecting, in batches, at least two collaborators from the multiple collaborators. Herein, the method **100** comprises implementing a sliding window technique over a randomized index of the multiple collaborators for selecting, in batches, the at least two collaborators from the multiple collaborators. At step **104,** the method **100** comprises receiving corresponding semantic segmentation model information from each of the at least two collaborators. Herein, the semantic segmentation model information from each of the at least two collaborators is received at an aggregator server. Further, herein the method **100** comprises optimizing the receiving of the semantic segmentation model information from each of the at least two collaborators by utilizing at least one of: sparsity transformations algorithm, pruning algorithm, or encoded polyline utility algorithm. At step **106,** the method **100** comprises assigning respective weight parameters to the semantic segmentation model information from each of the at least two collaborators. Herein, the method **100** comprises assigning higher weight parameter to the semantic segmentation model information being closer to a non-weighted average of the semantic segmentation model information from each of the at least two collaborators in comparison to the semantic segmentation model information of other of the at least two collaborators. Further, the method **100** comprises assigning higher weight parameter to the semantic segmentation model information based on a corresponding database size being larger in comparison to the semantic segmentation model information of other of the at least two collaborators. At step **108,** the method **100** comprises adding controlled noise to the weight parameters for the semantic segmentation model information from each of the at least two collaborators. Herein, the added noise is based on at least one of: a privacy budget parameter $\varepsilon$, a sensitivity scaling factor $\alpha$, and a database size of the corresponding semantic segmentation model information. At step **110,** the method **100** comprises generating an aggregated model based on the semantic segmentation model information using the weight parameters with the noise added thereto from each of the at least two collaborators. Herein, the aggregated model is generated at the aggregator server. Further, herein, the method **100** comprises transferring the aggregated model by the aggregator server to each of the multiple collaborators.

It may be appreciated that the steps **102** to **110** are only illustrative, and other alternatives may also be provided where one or more steps are added, one or more steps are removed, or one or more steps are provided in a different sequence without departing from the scope of the present disclosure.

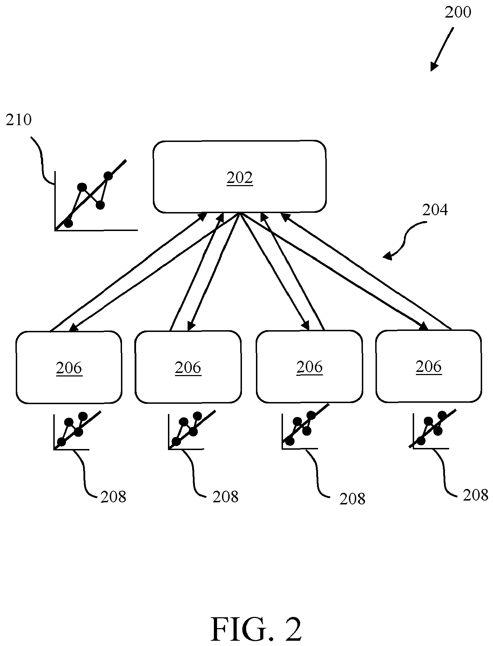

Referring to FIG. 2, illustrated is a simplified schematic diagram illustration of a system **200** for aggregation of semantic segmentation models from multiple collaborators, in accordance with an embodiment of the present disclosure. As shown, the system **200** comprises an aggregator server **202** and a communication network **204** to dispose the aggregator server **202** in communication with each of the multiple collaborators **206**. Herein, the aggregator server **202** receives semantic segmentation model information **208,** via the communication network **204,** comprising of at least two collaborators **206** (clients/nodes) and provides the capability to securely aggregate their model information. The aggregator server **202** receives an amount of model weights/parameters from the collaborators **206** and renders an aggregated model **210** resulting from the amount of processing to, for instance, the image type for producing information indicative of clustering parts of an image together which belong to the same object class.

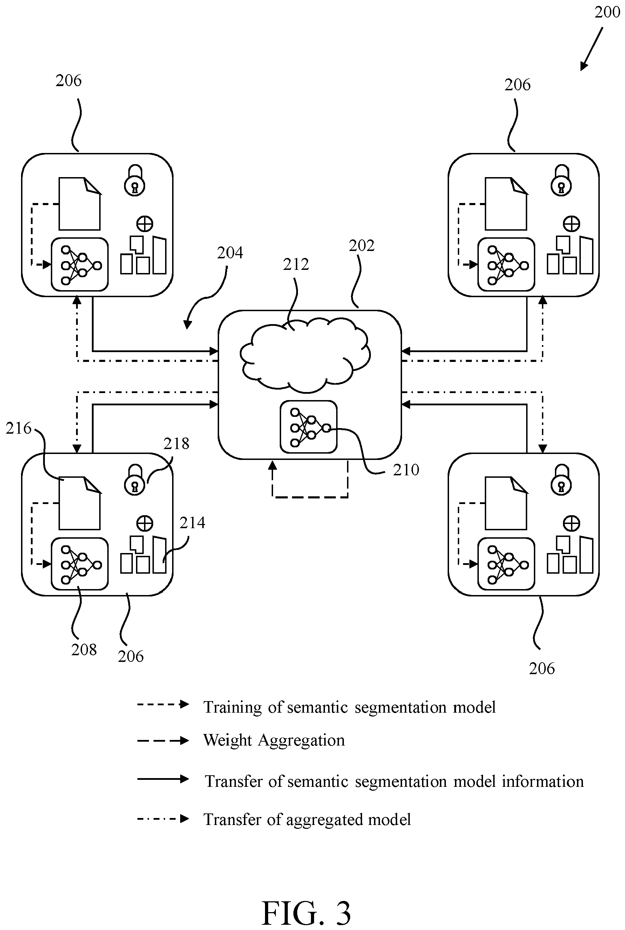

Referring to FIG. 3, illustrated is a detailed schematic diagram illustration of the system **200** for aggregation of semantic segmentation models from multiple collaborators **206,** in accordance with an embodiment of the present disclosure. As shown, the system **200** comprises the aggregator server **202** and the communication network **204** to dispose the aggregator server **202** in communication with each of the multiple collaborators **206**. As shown, the aggregator server **202** includes a computing arrangement **212** for performing processing for rendering of the aggregated model **210**. Also, each of the collaborators **206**, which may be associated with a medical facility **214** as shown, includes local data **216** which is used for training of semantic segmentation model information **208** therein. Further, each of the collaborators **206** may implement a security control **218** for providing secure storage and transfer of the local data **216** and the semantic segmentation model information **208** therein.

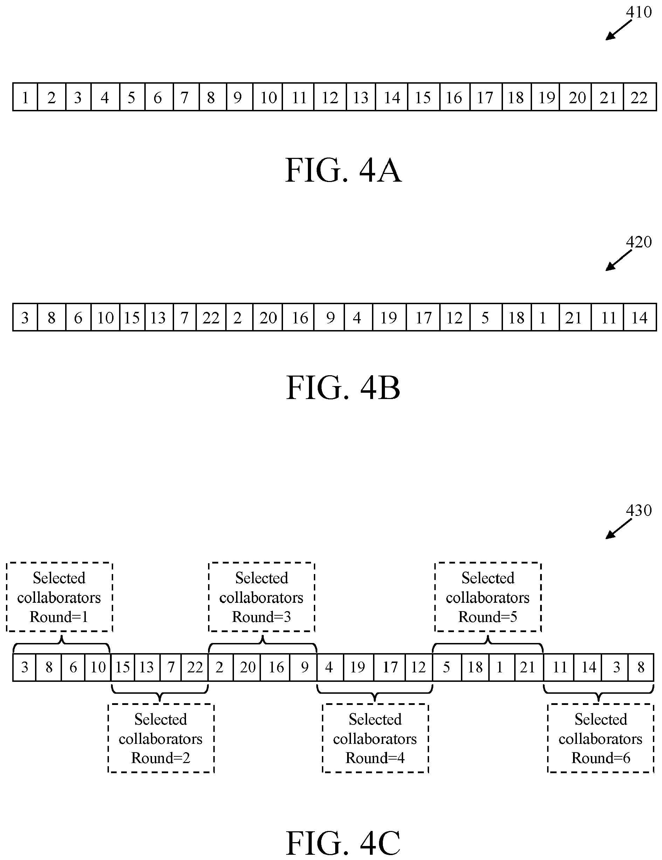

In the present system **200,** the aggregator server **202** is configured to select, in batches, at least two collaborators **206** from the multiple collaborators **206**. In an embodiment, the aggregator server **202** is configured to implement a sliding window technique over a randomized index of the multiple collaborators **206** for selecting, in batches, the at least two collaborators **206** from the multiple collaborators **206,** as discussed later in more detail in reference to FIGs. 4A-4C.

The aggregator server **202** is further configured to receive corresponding semantic segmentation model information **208** from each of the at least two collaborators **206**. In some embodiments, the aggregator server **202** is further configured to optimize the receiving of the semantic segmentation model information **208** from each of the at least two collaborators **206** by utilizing at least one of: sparsity transformations algorithm, pruning algorithm, or encoded polyline utility algorithm.

The aggregator server **202** is further configured to assign respective weight parameters to the semantic segmentation model information **208** from each of the at least two collaborators **206**. In an embodiment, the aggregator server **202** is configured to assign higher weight parameter to the semantic segmentation model information **208** being closer to a non-weighted average of the semantic segmentation model information **208** from each of the at least two collaborators **206** in comparison to the semantic segmentation model information **208** of other of the at least two collaborators **206**. Additionally, or alternatively, the aggregator server **202** is configured to assign higher weight parameter to the semantic segmentation model information **208** based on a corresponding database size being larger in comparison to the semantic segmentation model information **208** of other of the at least two collaborators **206**.

The aggregator server **202** is further configured to add controlled noise to the weight parameters for the semantic segmentation model information **208** from each of the at least two collaborators **206**. In an embodiment, the added noise is based on at least one of: a privacy budget parameter $\varepsilon$, a sensitivity scaling factor $\alpha$, and a database size of the corresponding semantic segmentation model information **208.**

The aggregator server **202** is further configured to generate the aggregated model **210** based on the semantic segmentation model information **208** using the weight parameters with the noise added thereto from each of the at least two collaborators **206**. The aggregator server **202** is further configured to transfer the aggregated model **210** to each of the multiple collaborators **206**. In some embodiments, the aggregator server **202** is further configured to optimize the transferring of the aggregated model **210** to each of the multiple collaborators **206** by utilizing at least one of: sparsity transformations algorithm, pruning algorithm, or encoded polyline utility algorithm.

Herein, the aggregator server **202** receives semantic segmentation model information **208,** via the communication network **204,** comprising of at least two collaborators **206** (clients/nodes) and provides the capability to securely aggregate their model information. The aggregator server **202** receives an amount of model weights/parameters from the collaborators **206** and renders an aggregated model **210** resulting from the amount of processing to, for instance, the image type for producing information indicative of clustering parts of an image together which belong to the same object class.

Referring to FIGs. 4A-4C, illustrated are exemplary illustrations of implementation of sliding window technique over a randomized index of the multiple collaborators, in accordance with an embodiment of the present disclosure. First, as shown FIG. 4A, the aggregator server (such as, the aggregator server **202** of FIGs. 2 and 3) receives an index **410** of multiple collaborators (such as, the collaborators **206** of FIGs. 2 and 3). Then, as shown FIG. 4B, the aggregator server randomize the index **410** to provide a randomized index **420** of the multiple collaborators to help with better learning. Subsequently, as shown FIG. 4C, the aggregator server is configured to implement a sliding window technique (as represented by reference numeral **430**) over the randomized index **420** of the multiple collaborators for selecting, in batches, the at least two collaborators from the multiple collaborators. Herein, once the randomized index **420** of the multiple collaborators is entirely used, the randomized index **420** is shuffled again and the process starts again to provide a new randomized index of the multiple collaborators.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

**Claims**

1.  A method (100) for aggregation of semantic segmentation models from multiple collaborators (206), the method (100) comprising:

    - selecting, in batches, at least two collaborators (206) from the multiple collaborators (206);
    - receiving corresponding semantic segmentation model information (208) from each of the at least two collaborators (206);
    - assigning respective weight parameters to the semantic segmentation model information (208) from each of the at least two collaborators (206);
    - adding controlled noise to the weight parameters for the semantic segmentation model information (208) from each of the at least two collaborators (206); and
- generating an aggregated model (210) based on the semantic segmentation model information (208) using the weight parameters with the noise added thereto from each of the at least two collaborators (206).

2. A method (100) according to claim 1 further comprising implementing a sliding window technique over a randomized index of the multiple collaborators (206) for selecting, in batches, the at least two collaborators (206) from the multiple collaborators (206).

3. A method (100) according to any of claims 1 or 2 further comprising assigning higher weight parameter to the semantic segmentation model information (208) being closer to a non-weighted average of the semantic segmentation model information (208) from each of the at least two collaborators (206) in comparison to the semantic segmentation model information (208) of other of the at least two collaborators (206).

4. A method (100) according to any of preceding claims further comprising assigning higher weight parameter to the semantic segmentation model information (208) based on a corresponding database size being larger in comparison to the semantic segmentation model information (208) of other of the at least two collaborators (206).

5. A method (100) according to any of preceding claims, wherein the added noise is based on at least one of: a privacy budget parameter $\varepsilon$, a sensitivity scaling factor $\alpha$, and a database size of the corresponding semantic segmentation model information (208).

6. A method (100) according to any of preceding claims, wherein the semantic segmentation model information (208) from each of the at least two collaborators (206) is received at an aggregator server (202), and wherein the aggregated model (210) is generated at the aggregator server (202).

7. A method (100) according to claim 6 further comprising transferring the aggregated model (210) by the aggregator server (202) to each of the multiple collaborators (206).

8. A method (100) according to claims 6 and 7 further comprising optimizing the receiving of the semantic segmentation model information (208) from each of the at least two collaborators (206) at the aggregator server (202) and the transferring of the aggregated model (210) by the aggregator server (202) to each of the multiple collaborators (206) by utilizing at least one of: sparsity transformations algorithm, pruning algorithm, or encoded polyline utility algorithm.

9. A system (200) for aggregation of semantic segmentation models from multiple collaborators (206), the system (200) comprising:

   - an aggregator server (202); and
   - a communication network (204) to dispose the aggregator server (202) in communication with each of the multiple collaborators (206),
   - wherein the aggregator server (202) is configured to:

      - select, in batches, at least two collaborators (206) from the multiple collaborators (206);
      - receive corresponding semantic segmentation model information (208) from each of the at least two collaborators (206);
      - assign respective weight parameters to the semantic segmentation model information (208) from each of the at least two collaborators (206);
      - add controlled noise to the weight parameters for the semantic segmentation model information (208) from each of the at least two collaborators (206); and
      - generate an aggregated model (210) based on the semantic segmentation model information (208) using the weight parameters with the noise added thereto from each of the at least two collaborators (206).

10. A system (200) according to claim 9, wherein the aggregator server (202) is configured to implement a sliding window technique over a randomized index of the multiple collaborators (206) for selecting, in batches, the at least two collaborators (206) from the multiple collaborators (206).

11. A system (200) according to any of claims 9 or 10, wherein the aggregator server (202) is configured to assign higher weight parameter to the semantic segmentation model information (208) being closer to a non-weighted average of the semantic segmentation model information (208) from each of the at least two collaborators (206) in comparison to the semantic segmentation model information (208) of other of the at least two collaborators (206).

12. A system (200) according to any of claims 9-11, wherein the aggregator server (202) is configured to assign higher weight parameter to the semantic segmentation model information (208) based on a corresponding database size being larger in comparison to the semantic segmentation model information (208) of other of the at least two collaborators (206).

13. A system (200) according to any of claims 9-12, wherein the added noise is based on at least one of: a privacy budget parameter $\varepsilon$, a sensitivity scaling factor $\alpha$, and a database size of the corresponding semantic segmentation model information (208).

14. A system (200) according to any of claims 9-13, wherein the aggregator server (202) is further configured to transfer the aggregated model (210) to each of the multiple collaborators (206).

15. A system (200) according to claim 14, wherein the aggregator server (202) is further configured to optimize the receiving of the semantic segmentation model information (208) from each of the at least two collaborators (206) and the transferring of the aggregated model (210) to each of the multiple collaborators (206) by utilizing at least one of: sparsity transformations algorithm, pruning algorithm, or encoded polyline utility algorithm.

100

SELECT, IN BATCHES, AT LEAST TWO COLLABORATORS FROM
MULTIPLE COLLABORATORS
102

RECEIVE CORRESPONDING SEMANTIC SEGMENTATION MODEL
INFORMATION FROM EACH OF AT LEAST TWO COLLABORATORS
104

ASSIGN RESPECTIVE WEIGHT PARAMETERS TO SEMANTIC
SEGMENTATION MODEL INFORMATION FROM EACH OF AT LEAST
TWO COLLABORATORS
106

ADD NOISE TO WEIGHT PARAMETERS FOR SEMANTIC
SEGMENTATION MODEL INFORMATION FROM EACH OF AT LEAST
TWO COLLABORATORS
108

GENERATE AGGREGATED MODEL BASED ON SEMANTIC
SEGMENTATION MODEL INFORMATION USING WEIGHT
PARAMETERS WITH NOISE ADDED THERETO FROM EACH OF AT
LEAST TWO COLLABORATORS
110

FIG. 1

FIG. 2

FIG. 3

410

| 1 | 2 | 3 | 4 | 5 | 6 | 7 | 8 | 9 | 10 | 11 | 12 | 13 | 14 | 15 | 16 | 17 | 18 | 19 | 20 | 21 | 22 |

# FIG. 4A

420

| 3 | 8 | 6 | 10 | 15 | 13 | 7 | 22 | 2 | 20 | 16 | 9 | 4 | 19 | 17 | 12 | 5 | 18 | 1 | 21 | 11 | 14 |

# FIG. 4B

430

Selected collaborators Round=1

Selected collaborators Round=3

Selected collaborators Round=5

| 3 | 8 | 6 | 10 | 15 | 13 | 7 | 22 | 2 | 20 | 16 | 9 | 4 | 19 | 17 | 12 | 5 | 18 | 1 | 21 | 11 | 14 | 3 | 8 |

Selected collaborators Round=2

Selected collaborators Round=4

Selected collaborators Round=6

# FIG. 4C

Europäisches
Patentamt

European
Patent Office

Office européen
des brevets

# EUROPEAN SEARCH REPORT

Application Number

EP 22 21 0102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHAN MUHAMMAD IRFAN ET AL: "Adaptive Weight Aggregation in Federated Learning for Brain Tumor Segmentation", 15 July 2022 (2022-07-15), 20220715, PAGE(S) 455 - 469, XP047628625, [retrieved on 2022-07-15] * abstract; figures 1,3 * * Sections 1, 2.2 * | 1-15 | INV. G06N3/098 |
| X | RAOUF KERKOUCHE ET AL: "Constrained Differentially Private Federated Learning for Low-bandwidth Devices", ARXIV.ORG, CORNELL UNIVERSITY LIBRARY, 201 OLIN LIBRARY CORNELL UNIVERSITY ITHACA, NY 14853, 27 February 2021 (2021-02-27), XP081893495, * abstract * * Section 2, 3 * | 1-15 | |
| X | CONSTANCE BEGUIER ET AL: "SAFER: Sparse secure Aggregation for FEderated leaRning", ARXIV.ORG, CORNELL UNIVERSITY LIBRARY, 201 OLIN LIBRARY CORNELL UNIVERSITY ITHACA, NY 14853, 29 July 2020 (2020-07-29), XP081729076, * abstract * * Sections II.A, IV * | 1-15 | TECHNICAL FIELDS SEARCHED (IPC) G06N |

The present search report has been drawn up for all claims

| Place of search | Date of completion of the search | Examiner |
|---|---|---|
| The Hague | 31 May 2023 | Houtgast, Ernst |

EPO FORM 1503 03.82 (P04C01)